# DEMANDE DE BREVET EUROPEEN

(11) **EP 2 052 919 A1**
(43) Date de publication de la demande: **29.04.2009**
(21) Numéro de dépôt: 08305682.0
(22) Date de dépôt: 14.10.2008
(51) Int. Cl.: B60R 21/215, B60R 21/205

(54) **Dispositif de sécurité à sac gonflable pour véhicule automobile**

(30) Priorité: 25.10.2007 FR 0758557
(71) Demandeur: Renault S.A.S., 92100 Boulogne-Billancourt (FR)
(72) Inventeur: Chheang, Nakry, 78470 Saint Remy les Chevreuses (FR); De-Bock, Thibault, 92100 Boulogne Billancourt (FR); Jegu, Corentin, 91190 Gif sur Yvette (FR)

(57) **Abrégé**

L'invention concerne un dispositif (16) de sécurité à sac gonflable (22) pour un véhicule automobile, dispositif qui comporte un module (18) de sécurité équipé d'un sac gonflable qui est apte à être déployé vers l'extérieur du dispositif (16), un cadre (26) qui est agencé en avant du module (18) de sécurité et qui délimite un orifice (28) à travers lequel le sac gonflable (22) est apte à être déployé, au moins un volet (30) qui est monté pivotant sur le cadre (26) autour d'un axe de pivotement (A), entre une position fermée de repos et une position ouverte, le volet (30) étant entraîné en pivotement vers sa position ouverte sous l'effort de poussée du sac gonflable (22) lors de son déploiement, une bande de matière comportant une zone d'articulation formant charnière (32) qui relie le cadre (26) au volet (30) et qui est apte à être pliée sous l'effort de poussée du sac gonflable (22), caractérisé en ce que la charnière (32) comporte au moins une nervure principale (38) de renfort, qui s'étend de façon à couper au moins une fois l'axe de pivotement (A) du volet (30) afin de rigidifier la charnière (32) pour freiner le volet (30) au cours de son pivotement.

## Description

L'invention concerne un dispositif de sécurité à sac gonflable pour un véhicule automobile, qui comporte un moyen de freinage d'un volet de déploiement du sac gonflable.

L'invention concerne plus précisément un dispositif de sécurité à sac gonflable pour un véhicule automobile, dispositif qui comporte :
- un module de sécurité équipé d'un sac gonflable qui est apte à être déployé, axialement d'arrière en avant vers l'extérieur du dispositif selon un axe de déploiement, depuis un état initial plié dans le module jusqu'à un état gonflé et déployé de sécurité ;
- un cadre qui est agencé axialement en avant du module de sécurité et qui délimite un orifice à travers lequel le sac gonflable est apte à être déployé ;
- au moins un volet qui est orthogonal à l'axe de déploiement et qui est monté pivotant sur le cadre autour d'un axe de pivotement, entre une position fermée de repos dans laquelle l'orifice de déploiement du sac gonflable est obturé et une position ouverte, le volet étant entraîné en pivotement vers sa position ouverte sous l'effort de poussée du sac gonflable lors de son déploiement ;
- une bande de matière comportant une zone d'articulation formant charnière qui relie le cadre au volet et qui est apte à être pliée sous l'effort de poussée du sac gonflable pour permettre au volet de pivoter autour de son axe de pivotement.

Le sac gonflable de sécurité, ou coussin gonflable, dénommé couramment par sa dénomination anglaise « airbag », est principalement utilisé dans un véhicule automobile pour protéger les passagers lors d'une collision et ainsi leur éviter de percuter violemment certains équipements du véhicule, comme le volant, une vitre latérale ou un appuie-tête avant pour un passager arrière.

Le sac gonflable est une membrane ou une enveloppe flexible qui est logée dans un module de sécurité dans un état initial plié.

En cas de collision du véhicule, de l'air ou un autre gaz est très rapidement injecté dans le sac gonflable, par exemple par une réaction chimique explosive, de sorte que le sac est déployé rapidement depuis son état initial plié jusqu'à un état final gonflé de sécurité dans lequel le sac gonflable est apte à protéger un passager contre un choc.

De nombreux types de dispositifs de sécurité à sac gonflable ont été proposés, notamment un dispositif de sécurité destiné à équipé une planche de bord d'un véhicule automobile, comme celui qui est décrit dans le document US-A-6,070,901 et qui permet de protéger un passager avant.

De façon générale, ce type de dispositif de sécurité de planche de bord comporte un module de sécurité, ou module airbag, logeant un sac gonflable qui est apte à être déployé d'arrière en avant depuis son état initial plié jusqu'à son état déployé gonflé de sécurité dans l'habitacle du véhicule.

Le dispositif de sécurité comporte un volet de déploiement du sac gonflable qui s'étend sous la planche de bord, contre une portion mécaniquement pré-affaiblie d'une face inférieure de la planche de bord du véhicule.

Le dispositif comporte un cadre qui délimite un orifice de déploiement du sac gonflable vers l'extérieur et qui est relié au volet par une charnière.

Lorsque le sac gonflable se déploie, le volet est entraîné en pivotement sous l'action de poussée du sac gonflable et la portion pré-affaiblie de la planche de bord cède, de sorte que le sac gonflable est apte à être déployé à travers l'orifice de déploiement et à travers la planche de bord, dans son état déployé de sécurité dans l'habitacle du véhicule.

Toutefois, la vitesse de déploiement du sac gonflable est telle que, lors de son déploiement, le volet atteint une vitesse de rotation élevée, de sorte que le volet est susceptible, notamment vers la fin de sa course, de percuter violemment et de détériorer des éléments du véhicule comme le pare-brise ou un élément décoratif agencé sur la planche de bord.

L'invention remédie notamment à cet inconvénient en proposant un dispositif de sécurité comportant un moyen de freinage du volet, notamment au voisinage de la fin de sa course.

Dans ce but, l'invention propose un dispositif de sécurité à sac gonflable du type décrit précédemment, caractérisé en ce que la charnière comporte au moins une nervure principale de renfort, qui s'étend de façon à couper au moins une fois l'axe de pivotement du volet afin de rigidifier la charnière pour freiner le volet au cours de son pivotement, notamment au voisinage de la fin de la course d'ouverture du volet.

Selon d'autres caractéristiques de l'invention :
- la nervure principale de renfort s'étend globalement parallèlement à l'axe de pivotement du volet en formant un serpentin qui ondule de manière régulière, de façon à couper plusieurs fois l'axe de pivotement du volet,
- le dispositif comporte une plaque avant rapportée qui s'étend sur tout ou partie d'une face avant de la charnière et qui comporte :
   -- une zone secondaire d'articulation qui s'étend selon l'axe de pivotement du volet, en regard de la zone d'articulation associée de la charnière ;
   -- au moins une nervure secondaire de renfort qui s'étend de façon à couper au moins une fois l'axe de pivotement du volet, afin de freiner le volet au cours de son pivotement, notamment au voisinage de la fin de la course du volet,
- la nervure secondaire de renfort s'étend globalement parallèlement à l'axe de pivotement du volet en formant un serpentin qui ondule de manière régulière de façon à couper plusieurs fois l'axe de pivotement du volet et la nervure secondaire et la nervure principale sont superposées axialement selon l'axe de déploiement du sac gonflable et sont décalées entre elles axialement selon l'axe de pivotement du volet, de sorte que lesdites nervures dessinent une tresse,
- la nervure principale est de forme concave bombée vers l'arrière et la nervure secondaire est de forme convexe bombée vers l'avant,
- le dispositif comporte au moins une nervure supplémentaire de renfort du volet qui s'étend sur le volet, orthogonalement à l'axe de pivotement du volet,
- le volet, la charnière et le cadre sont réalisés venus de matière en une seule pièce,
- lesdites nervures sont réalisées par emboutissage d'une plaque métallique,
- le dispositif comporte une plaque arrière rapportée qui s'étend sur tout ou partie d'une face arrière de la charnière pour rigidifier la charnière,
- la plaque avant rapportée et la plaque arrière rapportée sont fixées sur la charnière par soudage.

D'autres caractéristiques et avantages apparaîtront au cours de la lecture de la description détaillée qui va suivre pour la compréhension de laquelle on se reportera aux dessins en annexe parmi lesquels :
- la figure 1 est une vue schématique en section, illustrant un dispositif de sécurité qui est agencé sous une planche de bord d'un véhicule automobile et qui comporte un volet pivotant de déploiement d'un sac gonflable ;
- la figure 2 est une vue similaire à celle de la figure 1, illustrant le volet dans sa position ouverte et le sac gonflable de la figure 1 dans sa position gonflée de sécurité ;
- la figure 3 est une vue en perspective de trois quart de dessus éclatée selon l'axe de déploiement du sac gonflable, illustrant des nervures principales de renfort de la charnière de pivotement du volet de la figure 1, une plaque avant secondaire rapportée comportant des nervures secondaires de renfort et une plaque arrière rapportée ;
- la figure 4 est une vue schématique de dessus, illustrant l'agencement des nervures de renfort.

Dans la description qui va suivre, des chiffres de référence identiques désignent des pièces identiques ou ayant des fonctions similaires.

On utilisera à titre non limitatif les orientations longitudinale, verticale et transversale selon le trièdre L, V, T représenté aux figures.

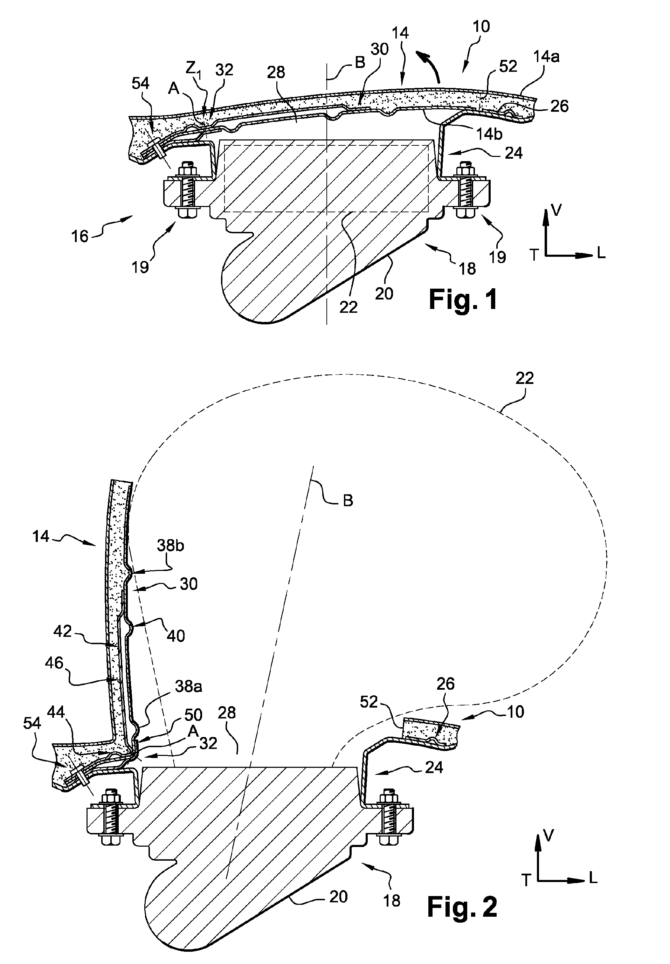

On adoptera aussi la direction d'arrière en avant en référence à la direction verticale de bas en haut de la figure 1.

La figure 1 représente une planche de bord 10 d'un habitacle d'un véhicule automobile, qui est agencée en vis à vis du siège avant passager (non représenté).

La planche de bord 10 comporte une peau 14 dont une face avant 14a, ou externe, est agencée en regard de l'habitacle et dont une face arrière 14b, ou interne, est agencée en regard d'un dispositif 16 de sécurité à sac gonflable.

Le dispositif 16 de sécurité comporte un module 18 de sécurité à sac gonflable, couramment appelé « module airbag ».

Le module 18 de sécurité est fixé sur un châssis 24 intermédiaire, par exemple au moyen d'une pluralité d'ensembles vis-écrous 19 (dont deux sont représentés), et le châssis 24 est fixé sur la structure du véhicule.

De façon classique, le module 18 de sécurité comporte un boîtier 20 dans lequel est agencé un sac gonflable 22 dans une position initiale pliée, comme l'illustre la figure 1.

Le module 18 de sécurité comporte des moyens de gonflage (non représentés) du sac gonflable 22, comme un moyen à gaz ou un moyen pyrotechnique, qui sont déclenchés à la suite d'un choc violent du véhicule automobile.

Le déclenchement des moyens de gonflage provoque le gonflage et le déploiement rapide du sac gonflable 22 selon un axe de déploiement B d'arrière en avant, depuis la position pliée initiale du sac gonflable 22, jusqu'à une position déployée gonflée de sécurité dans l'habitacle du véhicule, représentée à la figure 2.

Comme l'illustre les figures 1 à 3, le dispositif 16 de sécurité comporte un cadre 26 de forme annulaire qui est agencé en avant du module 18 de sécurité et qui est fixé sur la face arrière 14b de la peau 14 de la planche de bord 10, par exemple par soudage ou par collage.

De plus, le cadre 26 est ici fixé sur le châssis 24 par des moyens décrits ultérieurement.

Le cadre 26 délimite un orifice 28 rectangulaire à travers lequel le sac gonflable 22 est apte à être déployé d'arrière en avant selon son axe de déploiement B vertical.

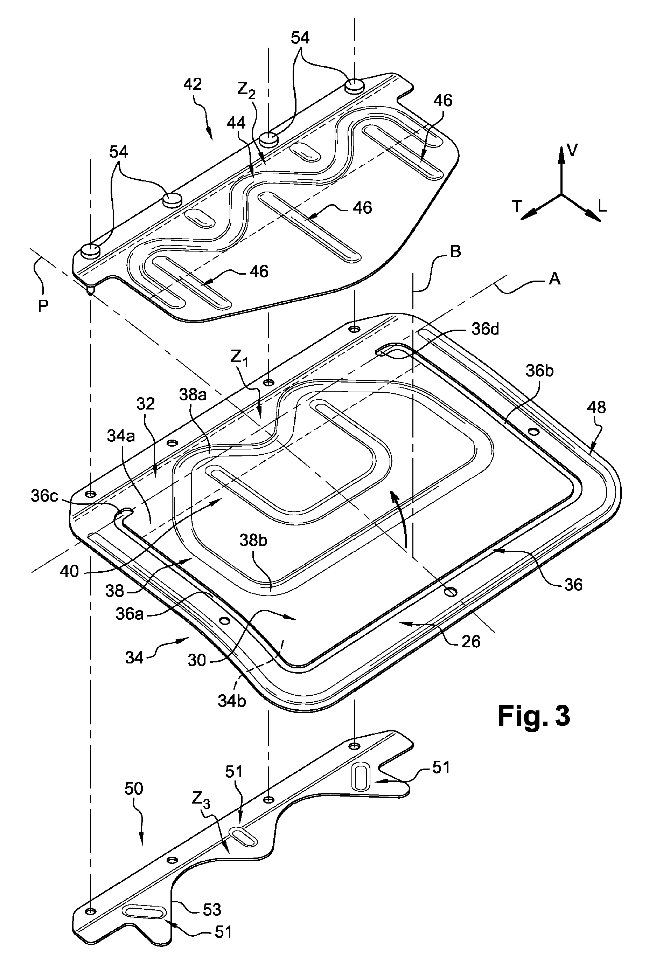

Comme le montre la figure 3, le dispositif 16 comporte un volet 30 qui est monté pivotant sur le cadre 26 autour d'un axe de pivotement A transversal, entre une position fermée de repos dans laquelle le volet 30 s'étend orthogonalement à l'axe de déploiement B de façon à obturer l'orifice 28 de déploiement du sac gonflable 22, et une position ouverte dans laquelle le volet est pivoté vers l'avant, de sorte que le sac gonflable 22 est apte à être déployé dans sa position gonflée.

Le volet 30 et le cadre 26 sont réalisés en une seule pièce dans une plaque principale 34 métallique, qui présente un plan de symétrie P orthogonal à l'axe de pivotement A du volet 30, comme le montre la figure 3.

Le volet 30 et le cadre 26 sont reliés par une bande de matière qui s'étend de part et d'autre de l'axe de pivotement A et qui comporte une zone d'articulation Z1, ou de pliage, formant charnière 32.

La zone d'articulation Z1 est approximativement délimitée par deux traits en pointillé à la figure 3.

La charnière 32 est apte à être pliée sous l'effort de poussée du sac gonflable 22 pour permettre au volet 30 de pivoter autour de son axe de pivotement A.

La plaque principale 34 comporte une lumière 36 en « U » qui délimite le contour du volet 30 par rapport au cadre 26.

La lumière 36 en « U » comporte une première branche 36a et une seconde branche 36b dont chacune s'étend longitudinalement depuis l'axe de pivotement A du volet 30.

Avantageusement, la lumière 36 est prolongée de façon à former une première portion 36c et une seconde portion 36d transversales de retour agencées en vis à vis, dont chacune s'étend selon l'axe de pivotement A, afin de favoriser le pliage de la charnière 32 autour de l'axe de pivotement A lors du pivotement du volet 30.

Selon un autre aspect, la charnière 32 comporte une première nervure principale 38 de renfort, dont un premier tronçon 38a forme un serpentin qui s'étend transversalement de manière régulière selon l'axe de pivotement A, et qui ondule de façon à couper plusieurs fois l'axe de pivotement A, ici quatre fois.

Le première nervure principale 38 de renfort comporte un second tronçon 38b en « U », dont une première branche et une seconde branche s'étendent longitudinalement jusqu'au volet 30 depuis une première extrémité et une seconde extrémité du premier tronçon 38a respectivement, de sorte que la première nervure principale 38 forme une boucle fermée.

La charnière 32 comporte une seconde nervure principale 40 en « U » qui est cernée par la première nervure principale, et dont une première branche et une seconde branche s'étendent longitudinalement globalement depuis l'axe de pivotement A jusqu'au volet 30.

Plus précisément, la première branche et la seconde branche de la seconde nervure principale 40 en « U » s'étendent chacune depuis un renfoncement concave du premier tronçon 38a de la première nervure principale 38.

La première nervure principale 38 et la seconde nervure principales 40 sont réalisées par emboutissage de la plaque principale 34 métallique, et elles sont chacune de forme concave bombée vers l'arrière, grâce à quoi ces nervures rigidifient structurellement la charnière 32, sans ajout de matière sur la plaque principale 34.

Selon un autre aspect, le dispositif 16 comporte une plaque secondaire avant 42 rapportée qui est fixée, ici par soudage, sur une face avant 34a de la plaque principale 34.

La plaque secondaire avant 42 qui s'étend sur la charnière 32 et sur une partie du volet 30, de façon symétrique selon le plan de symétrie P.

La plaque secondaire avant 42 comporte une zone secondaire d'articulation Z2 qui s'étend selon l'axe de pivotement A du volet 30, en regard de la zone d'articulation Z1 de la charnière 32, et qui est apte à être pliée sous l'effort de poussée du sac gonflable 22.

La zone secondaire d'articulation Z2 est approximativement délimitée par deux traits en pointillé à la figure 3

De façon complémentaire, la plaque secondaire avant 42 comporte une nervure secondaire 44 de la forme d'un serpentin qui s'étend transversalement sur la zone secondaire d'articulation Z2 de manière régulière selon l'axe de pivotement A, et qui ondule de façon à couper plusieurs fois l'axe de pivotement A, ici six fois.

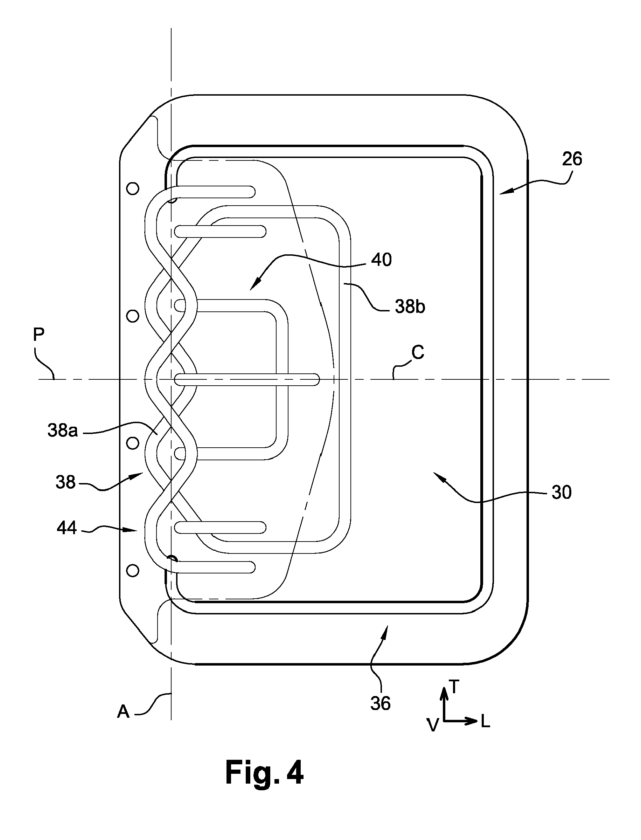

Comme on peut le voir au schéma de la figure 4, la nervure secondaire 44 et le premier tronçon 38a de la première nervure principale 38 sont superposées axialement selon l'axe de déploiement B du sac gonflable 22 et elles sont décalées transversalement l'une par rapport à l'autre, de sorte que la nervure secondaire 44 et le premier tronçon 38a de la première nervure principale 38 ondulent en s'entrecroisant régulièrement et en dessinant une tresse.

Un tel agencement en tresse permet, lors du pivotement du volet 30, de répartir les zones d'articulation Z1, Z2, ou de pliage, formant charnière sur une large bande de matière, grâce à quoi le pliage des zones d'articulation absorbe une partie sensible de l'énergie du pivotement du volet 30, notamment à la fin de la course de pivotement du volet 30.

La plaque secondaire avant 42 comporte une série de trois nervures secondaires supplémentaires 46 de renfort dont chacune s'étend longitudinalement depuis le voisinage de l'axe A, jusqu'au volet 30.

Plus précisément, chaque nervure supplémentaire 46 s'étend depuis un renfoncement concave de la nervure secondaire 44 en serpentin.

La nervure secondaire 44 et les trois nervures supplémentaires 46 de la plaque secondaire avant 42 sont chacune réalisées par emboutissage de la plaque principale 34, et elles sont chacune de forme convexe bombée vers l'avant.

Complémentairement, le cadre 26 comporte une nervure 48 de renfort en « U », dont le contour longe celui de la lumière 36 en « U », comme le montre la figure 3.

Enfin, le dispositif 16 comporte une plaque secondaire arrière 50 rapportée qui est fixée sur une face arrière 34b de la plaque principale 34, ici par soudage.

La plaque secondaire arrière 50 comporte une zone secondaire Z3 d'articulation qui s'étend selon l'axe de pivotement A du volet 30, en regard de la zone d'articulation Z1 de la charnière 32, et qui est apte à être pliée sous l'effort de poussée du sac gonflable 22.

De plus, la plaque secondaire arrière 50 est délimitée par un bord 53 qui s'étend transversalement en formant un serpentin et qui longe le bord extérieur du premier tronçon 38a de la nervure principale 38, afin de renforcer la charnière 32.

Aussi, la plaque secondaire arrière 50 comporte trois bossages 51 de renfort dont chacun est de forme concave bombée vers l'arrière.

La plaque principale 34, la plaque secondaire avant 42 et la plaque secondaire arrière 50 sont liées entre elles et traversées par quatre pions 54 de fixation en forme de clou, dont chacun s'étend globalement parallèlement à l'axe de déploiement B, afin d'empêcher les plaques de glisser les unes par rapport aux autres lors du pliage de la charnière 32.

Avantageusement, chaque pion 54 comporte une extrémité libre arrière qui est fixée dans le châssis 24, par exemple à la manière d'un rivet, de façon à fixer l'ensemble constitué par les plaques sur le châssis 24.

De même, le dispositif 16 comporte une pluralité de pions supplémentaires de fixation (non représentés), qui fixent le cadre 26 sur le châssis 24

Ainsi, lorsque les moyens de gonflage du sac gonflable 22 sont déclenchés, le sac gonflable 22 est déployé vers l'avant selon son axe de déploiement B, depuis sa position initiale pliée dans le module 18.

Le sac gonflable 22 exerce un effort de poussée sur le volet 30, produisant le pliage de la charnière 32 de sorte que le volet 30 est entraîné en pivotement autour de son axe de pivotement A, depuis sa position fermée de repos vers sa position ouverte.

Le pivotement du volet 30 provoque l'arrachement de la peau 14 de la planche de bord 10.

A cet effet, la face arrière 14b de la peau 14 est pré-affaiblie par une encoche 52 qui s'étend en « U » de façon coïncidente à la lumière 36 en « U » de la plaque principale 34.

Au cours du pivotement du volet 30 vers sa position ouverte, les différentes nervures 38, 40, 44, 46 s'opposent au pivotement du volet 30 de façon à freiner le volet 30 au cours de son pivotement.

Ainsi, au voisinage de la fin de la course du volet 30, la vitesse de pivotement du volet 30 est telle que le volet 30 endommage peu ou pas les éléments avec lesquels il est susceptible d'entrer en contact.

Selon une variante de réalisation, le volet 30 et le cadre 26 sont réalisés venus de matière par moulage en matière plastique, en une seule pièce.

Selon cette variante, les nervures de renfort peuvent être des inserts métalliques qui sont noyés dans le volet 30 lors du moulage.

Selon une autre variante, la première nervure principale 38 en serpentin et la nervure secondaire 44 en serpentin peuvent être réalisées dans une même plaque principale 34.

Enfin, à titre non limitatif, la charnière qui relie le volet 30 au cadre 26 peut être une charnière rapportée.

## Revendications

1. Dispositif (16) de sécurité à sac gonflable (22) pour un véhicule automobile, dispositif qui comporte :
- un module (18) de sécurité équipé d'un sac gonflable qui est apte à être déployé, axialement d'arrière en avant vers l'extérieur du dispositif (16) selon un axe de déploiement (B), depuis un état initial plié dans le module (18) jusqu'à un état gonflé et déployé de sécurité ;
- un cadre (26) qui est agencé axialement en avant du module (18) de sécurité et qui délimite un orifice (28) à travers lequel le sac gonflable (22) est apte à être déployé ;
- au moins un volet (30) qui est orthogonal à l'axe de déploiement (B) et qui est monté pivotant sur le cadre (26) autour d'un axe de pivotement (A), entre une position fermée de repos dans laquelle l'orifice (28) de déploiement du sac gonflable (22) est obturé et une position ouverte, le volet (30) étant entraîné en pivotement vers sa position ouverte sous l'effort de poussée du sac gonflable (22) lors de son déploiement ;
- une bande de matière comportant une zone d'articulation (Z1) formant charnière (32) qui relie le cadre (26) au volet (30) et qui est apte à être pliée sous l'effort de poussée du sac gonflable (22) pour permettre au volet (30) de pivoter autour de son axe de pivotement (A),
**caractérisé en ce que** la charnière (32) comporte au moins une nervure principale (38) de renfort, qui s'étend globalement parallèlement à l'axe de pivotement (A) du volet (30) en formant un serpentin qui ondule de manière régulière, de façon à couper plusieurs fois l'axe de pivotement (A) du volet (30), afin de rigidifier la charnière (32) pour freiner le volet (30) au cours de son pivotement, notamment au voisinage de la fin de la course d'ouverture du volet (30).

2. Dispositif (16) selon l'une quelconque des revendications précédentes, **caractérisé en ce que** le dispositif (16) comporte une plaque avant (42) rapportée qui s'étend sur tout ou partie d'une face avant de la charnière (32) et qui comporte :
- une zone secondaire d'articulation (Z2) qui s'étend selon l'axe de pivotement (A) du volet (30), en regard de la zone d'articulation (Z1) associée de la charnière (32) ;
- au moins une nervure secondaire (44) de renfort qui s'étend de façon à couper au moins une fois l'axe de pivotement (A) du volet (30), afin de freiner le volet (30) au cours de son pivotement, notamment au voisinage de la fin de la course du volet (30).

3. Dispositif (16) selon la revendication 2, **caractérisé en ce que** la nervure secondaire (44) de renfort s'étend globalement parallèlement à l'axe de pivotement (A) du volet (30) en formant un serpentin qui ondule de manière régulière de façon à couper plusieurs fois l'axe de pivotement (A) du volet (30) et **en ce que** la nervure secondaire (44) et la nervure principale (38) sont superposées axialement selon l'axe de déploiement (B) du sac gonflable (22) et sont décalées entre elles axialement selon l'axe de pivotement (A) du volet (30), de sorte que lesdites nervures (38, 44) dessinent une tresse.

4. Dispositif (16) selon la revendication 2 ou 3, **caractérisé en ce que** la nervure principale (38) est de forme concave bombée vers l'arrière et la nervure secondaire (44) est de forme convexe bombée vers l'avant.

5. Dispositif (16) selon l'une quelconque des revendications précédentes, **caractérisé en ce qu'**il comporte au moins une nervure supplémentaire (46) de renfort du volet (30) qui s'étend sur le volet (30), orthogonalement à l'axe de pivotement (A) du volet (30).

6. Dispositif (16) selon l'une quelconque des revendications précédentes, **caractérisé en ce que** le volet (30), la charnière (32) et le cadre (26) sont réalisés venus de matière en une seule pièce.

7. Dispositif (16) selon les revendications 1, 2 et 5, **caractérisé en ce que** lesdites nervures (38, 44, 46) sont réalisées par emboutissage d'une plaque métallique (34).

8. Dispositif (16) selon l'une quelconque des revendications précédentes, **caractérisé en ce qu'**il comporte une plaque arrière (50) rapportée qui s'étend sur tout ou partie d'une face arrière de la charnière (32) pour rigidifier la charnière (32).

9. Dispositif (16) selon les revendications 2 et 8, **caractérisé en ce que** la plaque avant (42) rapportée et la plaque arrière (50) rapportée sont fixées sur la charnière (32) par soudage.
